# EUROPÄISCHE PATENTSCHRIFT

(11) **EP 3 074 757 B1**
(45) Veröffentlichungstag und Bekanntmachung des Hinweises auf die Patenterteilung: **22.11.2017**
(21) Anmeldenummer: 14803152.9
(22) Anmeldetag: 28.11.2014
(51) Int. Cl.: G01N 21/65

(54) **VERFAHREN ZUR UNTERSUCHUNG EINER PROBE DURCH CARS-MIKROSKOPIE**
METHOD FOR ANALYZING A SAMPLE USING CARS MICROSCOPY
PROCÉDÉ D'ANALYSE D'UN ÉCHANTILLON PAR MICROSCOPIE CARS

(30) Priorität: 28.11.2013 DE 102013224412
(43) Veröffentlichungstag der Anmeldung: 05.10.2016
(73) Patentinhaber: Leica Microsystems CMS GmbH, 35578 Wetzlar (DE)
(72) Erfinder: SÄGMÜLLER, Bernd, 69514 Laudenbach (DE)
(74) Vertreter: Bradl, Joachim
(86) Internationale Anmeldenummer: PCT/EP2014/075901
(87) Internationale Veröffentlichungsnummer: WO 2015/079008

(56) Entgegenhaltungen:
- WO-A2-2013/028926
- JOHN PAUL PEZACKI ET AL: "Chemical contrast for imaging living systems: molecular vibrations drive CARS microscopy", NATURE CHEMICAL BIOLOGY, Bd. 7, Nr. 3, 1. März 2011 (2011-03-01), Seiten 137-145, XP055174176, ISSN: 1552-4450, DOI: 10.1038/nchembio.525
- LI LI ET AL: "Quantitative Coherent Anti-Stokes Raman Scattering Imaging of Lipid Distribution in Coexisting Domains", BIOPHYSICAL JOURNAL, Bd. 89, Nr. 5, 1. November 2005 (2005-11-01), Seiten 3480-3490, XP055174179, ISSN: 0006-3495, DOI: 10.1529/biophysj.105.065607
- PRESCHER JENNIFER A ET AL: "Chemistry in living systems", NATURE CHEMICAL BIOLOGY, NATURE PUB. GROUP, Bd. 1, Nr. 1, 1. Juni 2005 (2005-06-01), Seiten 13-21, XP002410570, ISSN: 1552-4450, DOI: 10.1038/NCHEMBIO0605-13
- DAVID C. KENNEDY ET AL: "Cellular Consequences of Copper Complexes Used To Catalyze Bioorthogonal Click Reactions", JOURNAL OF THE AMERICAN CHEMICAL SOCIETY, Bd. 133, Nr. 44, 9. November 2011 (2011-11-09), Seiten 17993-18001, XP055174194, ISSN: 0002-7863, DOI: 10.1021/ja2083027

## Beschreibung

Die Erfindung betrifft ein Verfahren zur Untersuchung einer von einer biologischen Quelle abgeleiteten Probe durch CARS-Mikroskopie gemäß dem Oberbegriff des Patentanspruchs 1.

### Stand der Technik

Unter nichtlinearer Raman-Spektroskopie versteht man spektroskopische Untersuchungsverfahren, die auf der nichtlinearen Raman-Streuung von Licht an Festkörpern oder Gasen beruhen. Die vorliegende Erfindung bezieht sich dabei auf mikroskopische Untersuchungsverfahren auf Grundlage der kohärenten Anti-Stokes-Raman-Streuung (engl. Coherent Anti-Stokes Raman Scattering, CARS).

Für solche Untersuchungsverfahren (auch als CARS-Mikroskopie bezeichnet) werden zwei Laser, die Licht unterschiedlicher Wellenlängen emittieren (ν_{P} und ν_{S}, Pump- und Stokeslichtstrahl), verwendet, wobei ν_{S} durchstimmbar sein sollte, um ein CARS-Spektrum ν_{CARS} zu erzeugen: ν_{CARS} = 2ν_{P} - ν_{S}, I_{CARS} ∼ (I_{P})² · I_{S}.

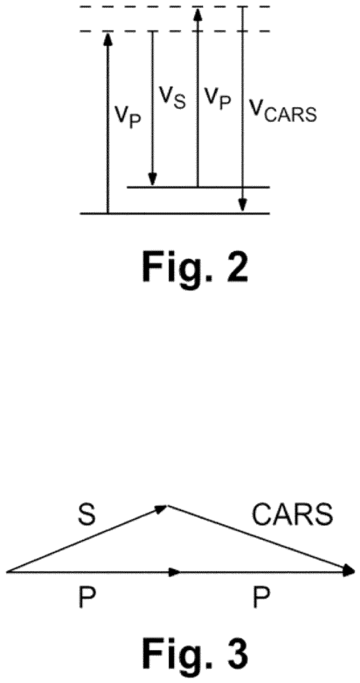

In Figur 2 ist ein Termschema eines CARS-Übergangs schematisch dargestellt. Stimmt hierbei die Differenzfrequenz ν_{P} - ν_{S} mit der Differenzfrequenz zwischen zwei molekularen Vibrationszuständen |1〉 und |0〉 in einer untersuchten Probe überein, wird das CARS-Signal verstärkt. Strukturen einer Probe, in denen solche unterschiedlichen molekularen Vibrationszustände auftreten und zudem auch entsprechend detektierbar sind, typischerweise charakteristische chemische Bindungen, werden nachfolgend als Resonanzstellen bezeichnet. Entsprechende Strukturen eines Moleküls oder diese enthaltende Moleküle insgesamt werden auch als Streuer, engl. Scatterers, bezeichnet. Der Pumplichtstrahl und der Stokeslichtstrahl werden bei mikroskopischen Anwendungen koaxial vereinigt und gemeinsam auf dasselbe Probenvolumen fokussiert. Die Richtung, in der die Anti-Stokes-Strahlung emittiert wird, ergibt sich aus der Phasenanpassungsbedingung für den zugrundeliegenden Vier-Wellen-Mischprozess, wie schematisch in Figur 3 dargestellt.

Verfahren und Vorrichtungen zur CARS-Mikroskopie sind beispielsweise aus der DE 102 43 449 A1 (zugleich US 7 092 086 B2) bekannt, die ein CARS-Mikroskop mit Mitteln zur Erzeugung eines Pumplichtstrahls und eines Stokeslichtstrahls, die koaxial durch eine Mikroskopoptik auf eine Probe richtbar sind, und mit einem Detektor zur Detektion von entsprechendem Detektionslicht zeigt.

Weitere physikalische Grundlagen der CARS-Mikroskopie sind gängigen Nachschlagewerken entnehmbar (siehe beispielsweise X.S. Xie et al., Coherent Anti-Stokes Raman Scattering Microscopy, in: J.B. Pawley (Hrsg.), Handbook of Biological Confocal Microscopy, 3. Aufl. New York: Springer, 2006).

Im Vergleich zur herkömmlichen oder konfokalen Raman-Mikroskopie können bei der CARS-Mikroskopie insbesondere höhere Ausbeuten an Detektionslicht erzielt und störende Nebeneffekte besser unterdrückt werden. Ferner kann das Detektionslicht einfacher vom Beleuchtungslicht getrennt werden.

Da, wie erwähnt, bei der CARS-Mikroskopie charakteristische Eigenschwingungen der Moleküle einer Probe bzw. bestimmter chemischer Bindungen genutzt werden können, erlaubt diese eine speziesselektive Bildgebung, die grundsätzlich auch ohne weitere Marker und Farbstoffe auskommt. Durch CARS-Mikroskopie können molekulare Strukturinformationen über eine Probe mit dreidimensionaler räumlicher Auflösung erhalten werden.

Die CARS-Mikroskopie ist jedoch stets auf das Vorhandensein entsprechender Resonanzstellen in der Probe angewiesen. Fehlen Resonanzstellen oder heben sich bei interessierenden Strukturen die Differenzfrequenzen ihrer Vibrationszustände nicht ausreichend von jenen der Umgebung ab, können diese nicht detektiert werden. Ferner ist bei den bekannten Verfahren zur CARS-Mikroskopie die Unterdrückung des nichtresonanten Hintergrunds häufig schwierig.

Zur Manipulation oder Verringerung des nichtresonanten Hintergrunds können beispielsweise Pikosekunden-Laserpulse zum Einsatz kommen, die jedoch die Verwendung entsprechend aufwendiger Laser erfordern. Weitere Möglichkeiten zur Verringerung des nichtresonanten Hintergrunds sind die sogenannte Epi-Detektion und die polarisationssensitive Detektion. In diesem Zusammenhang kommen ferner zeitaufgelöste Verfahren zum Einsatz. Eine weitere Möglichkeit ist die Kontrolle der Phase der Anregungspulse.

Die genannten Verfahren erweisen sich jedoch in der Praxis als mehr oder weniger aufwendig. Ferner kann in bestimmten Fällen eine selektive Hervorhebung definierter Strukturen in einer Probe wünschenswert sein, die in herkömmlichen Verfahren zur CARS-Mikroskopie jedoch nicht möglich ist.

Die vorliegende Erfindung will hier Abhilfe schaffen und stellt sich die Aufgabe, ein entsprechend verbessertes Verfahren zur CARS-Mikroskopie bereitzustellen.

### Offenbarung der Erfindung

Diese Aufgabe wird durch ein Verfahren zur Untersuchung einer von einer biologischen Quelle abgeleiteten Probe durch CARS-Mikroskopie mit den Merkmalen des Patentanspruchs 1 gelöst.

Bevorzugte Ausgestaltungen sind jeweils Gegenstand der abhängigen Patentansprüche und der nachfolgenden Beschreibung.

### Vorteile der Erfindung

Die vorliegende Erfindung geht von einem bekannten Verfahren zur CARS-Mikroskopie aus. Ein derartiges Verfahren umfasst die Untersuchung einer von einer biologischen Quelle abgeleiteten Probe, bei dem ein durch Anregung von Resonanzstellen in der Probe mittels Laserbestrahlung durch kohärente Anti-Stokes-Raman-Streuung erzeugtes Signal bildgebend erfasst wird, und bei dem aus dem Signal optional auch Struktureigenschaften der die Resonanzstellen enthaltenden chemischen Strukturen abgeleitet werden können.

Ist im Rahmen der vorliegenden Erfindung von einer "von einer biologischen Quelle abgeleiteten Probe" die Rede, kann es sich hierbei um eine direkt einem biologischen System entnommene Probe handeln, beispielsweise eine tierische Gewebeprobe, eine pflanzliche Struktur und/oder ein hiervon abgeleitetes Präparat. Die vorliegende Erfindung kann jedoch auch in mehr oder weniger stark aufbereiteten Proben, beispielsweise in der Lebensmittelchemie, zum Einsatz kommen. Insbesondere eignet sich die vorliegende Erfindung beispielsweise zur Reinheitsüberprüfung, beispielsweise von Ölen.

Die Erfindung eignet sich naturgemäß besonders für die Markierung in biologischen Proben, beispielsweise Nervengewebe, bei dem die Intelligenz eines Markers mit der Spezifität der Schwingungsspektroskopie kombiniert werden kann. Damit wird es möglich, beispielsweise Lipide gleichzeitig auf Marker zu prüfen und bildgebend zu verarbeiten, die zuvor nur getrennt erfassbar waren.

Die Struktureigenschaften der die Resonanzstellen umfassenden chemischen Strukturen können aus dem durch die kohärente Anti-Stokes-Raman-Streuung erzeugten Signal auf bekannte Weise abgeleitet werden. Ein entsprechendes Signal, das bei Verwendung durchstimmbarere Stokeslichtstrahlen beispielsweise auch in Form von Spektren erhalten werden kann, enthält Merkmale, beispielsweise entsprechende Wellenlängen, Banden und/oder Peaks, die spezifisch für die jeweils enthaltenen Resonanzstellen, insbesondere die jeweiligen chemischen Bindungen, sind. Diese werden als Raman- bzw. CARS-Shifts (die den Differenzfrequenzen zwischen den jeweiligen molekularen Vibrationszuständen entsprechen), typischerweise in Form von Wellenzahlen, angegeben. Für chemische Bindungen erhaltene charakteristische Wellenzahlen entnimmt der Fachmann einschlägigen Nachschlagewerken.

Die vorliegende Erfindung eignet sich auch für den Einsatz von Stokeslichtstrahlen fester Wellenlänge. In diesem Fall werden zwar keine Spektren aufgenommen, das durch die kohärente Anti-Stokes-Raman-Streuung erzeugte Signal kann aber auch in einem solchen Fall für eine Bildgebung verwendet werden.

Erfindungsgemäß umfasst ein derartiges Verfahren, die zumindest eine Resonanzstelle mittels einer bioorthogonalen Reaktion einer intrinsischen chemischen Struktur der Probe mit zumindest einem weiteren Reaktionspartner bereitzustellen, also eine entsprechende Struktur, die nicht von Haus aus in der Probe enthalten ist, durch die bioorthogonale Reaktion einzubringen.

Der Begriff der bioorthogonalen Reaktion wird nachfolgend noch ausführlich erläutert. Unter dem Begriff "intrinsische chemische Struktur" wird hier eine chemische Struktur verstanden, die aufgrund der Herkunft der Probe bereits in dieser enthalten ist. In aus biologischen Quellen stammenden Proben handelt es sich hierbei beispielsweise um aliphatische Ketten mit entsprechenden Bindungen in Lipiden, Peptidbindungen in Proteinen und dergleichen. Derartige intrinsische chemische Strukturen weisen Resonanzstellen auf, die durch CARS-Mikroskopie bildgebend erfasst werden können.

Im Gegensatz zu solchen intrinsischen Resonanzstellen bzw. den diesen zugrundeliegenden chemischen Strukturen handelt es sich bei erfindungsgemäß in eine Probe eingebrachten Resonanzstellen um solche, die die Probe aufgrund ihrer natürlichen Herkunft nicht aufweist. Die Erfindung ermöglicht es also, eine Probe, die von Haus aus nicht oder nicht ausreichend über Resonanzstellen verfügt, bzw. bei der die Resonanzstellen nicht die erwünschte Lokalisierung oder Spezifität aufweisen, mit entsprechenden Resonanzstellen zu versehen.

Erfindungsgemäß kann entweder vorgesehen sein, dass die wenigstens eine Resonanzstelle zumindest teilweise Teil des zumindest einen weiteren Reaktionspartners ist und/oder dass diese zumindest teilweise durch die bioorthogonale Reaktion selbst erzeugt wird. Ersterer Fall entspricht im Grundsatz klassischen Färbereaktionen und/oder Markierungsreaktionen mit Fluoreszenzfarbstoffen. Hierbei wird in der Regel eine fluoreszierende bzw. farbgebende Struktur in einem entsprechenden Molekül bereitgestellt und mit reaktiven Strukturen der Probe gekoppelt. Im Gegensatz dazu ermöglicht die Verwendung des erfindungsgemäßen Verfahrens jedoch auch die Erzeugung von Resonanzstellen bei der Durchführung der bioorthogonalen Reaktion selbst.

Dies kann beispielsweise durch Cycloaddition eines konjugierten Diens mit einem Dienophil (das eine Doppel- oder Dreifachbindung aufweisen kann) erfolgen, wie nachfolgend veranschaulicht:

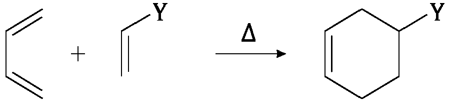

Wird hier beispielsweise der Rest Y als Kopplungsstelle verwendet, kann für die Zugabe und Durchreaktion eines geeigneten Diens eine Struktur erzeugt werden, die in der obigen Reaktionsgleichung rechts dargestellt ist, und aufgrund ihrer spezifischen Eigenschaften ein wohldefiniertes CARS-Muster zeigt, auf das ein nachgelagerter Detektionsprozess abgestimmt werden kann.

Das erfindungsgemäße Verfahren kann, wie erwähnt, insbesondere auch zur Betonung bzw. Sichtbarmachung normalerweise mittels CARS-Mikroskopie nicht detektierbarer chemischer Strukturen verwendet werden.

Insbesondere ermöglicht die vorliegende Erfindung dann, wenn die Resonanzstellen mittels der bioorthogonalen Reaktion erst geschaffen werden, die Verwendung kleiner Moleküle, die sich tief in ein entsprechendes Gewebe einbringen lassen, da keine sterische Behinderung erfolgt und diese beispielsweise durch ein Gewebe diffundieren. Dies ist ein wesentlicher Vorteil bei der Verwendung bioorthogonaler Reaktionen im Vergleich zu herkömmlichen Färbetechniken, beispielsweise mittels Fluoreszenzfarbstoffen. Da mittels CARS-Mikroskopie, wie erwähnt, eine dreidimensionale Bildgebung möglich ist, ist eine derartige Einbringung in das Gewebe von besonderem Interesse.

Die vorliegende Erfindung beruht, wie erwähnt, auf der Verwendung bioorthogonaler chemischer Reaktionen. Unter bioorthogonalen Reaktionen werden dabei im Rahmen der vorliegenden Anmeldung chemische Reaktionen verstanden, die in lebenden Systemen ablaufen können, ohne nennenswert mit nativen Prozessen zu interferieren. Insbesondere können bioorthogonale Reaktionen ohne zellschädigende Effekte ablaufen.

Der Begriff der Bioorthogonalität und die hier einschlägigen chemischen Reaktionen sind in der Fachwelt bekannt (vgl. E.M. Sletten und C.R. Bertozzi, Bioorthogonale Chemie - oder: in einem Meer aus Funktionalität nach Selektivität fischen, Angew. Chem. 121 (38), 7108-7133, 2009, zugleich E.M. Sletten und C.R. Bertozzi, Bioorthogonal Chemistry: Fishing for Selectivity in a Sea of Functionality, Angew. Chem. Int. Ed. Engl. 48 (38), 6974-6998, 2009). Eine Übersicht geben auch K.V. Reyna und Q. Lin, Bioorthogonal Chemistry: Recent Progress and Future Directions, Chem. Commun. (Camb.) 46(10), 1589-1600, 2010.

Typische bioorthogonale Reaktionen umfassen dabei beispielsweise die 1,3-dipolare Cycloaddition zwischen Aziden und Cyclooctinen (sogenannte kupferfreie Klickchemie, vgl. J.M. Baskin et al., Copper-Free Klick Chemistry for Dynamic in vivo Imaging, Proc. Natl. Acad. Sci. U.S.A. 104(43), 16793-16797, 2007). Weitere typische Reaktionen sind die Reaktion zwischen Nitronen und den genannten Cyclooctinen, die Oxim-/Hydrationbildung aus Aldehyden und Ketonen, Tetrazinreaktionen, isonitrilbasierte Klickreaktionen und die Quadricyclanbildung.

Als besonders vorteilhaft für die Verwendung in der bioorthogonalen Reaktion gemäß der vorliegenden Erfindung wird eine Diels-Alder-Reaktionen und/oder eine Staudinger-Ligation angesehen. Bei der Staudinger- Ligation handelt es sich um ein hoch chemoselektives Verfahren zur Herstellung von Biokonjugaten. Die jeweiligen Reaktionspartner sind hierbei zu beinahe allen in biologischen Systemen präsenten funktionellen Gruppen bioorthogonal und reagieren bereits in wässriger Umgebung bei Raumtemperatur. Dies ermöglicht die Anwendung der Staudinger-Ligation auch in komplexen Umgebungen einer lebenden Zelle. Zu Details sei auf die einschlägige Fachliteratur verwiesen (vgl. beispielsweise S. Sander et al., Staudinger Ligation as a Method for Bioconjugation, Angew. Chem. Int. Ed. Engl. 50 (38), 8806-8827, 2011).

Die Verwendung bioorthogonaler Reaktionen umfasst typischerweise zwei Schritte, wobei zunächst ein zelluläres Substrat, also hier die zu untersuchende Probe, mit einer bioorthogonalen funktionellen Gruppe versehen wird, die in die Probe eingeführt und auch als chemischer Reporter bezeichnet wird. Verwendete Substrate umfassen beispielsweise Metaboliten, Enzyminhibitoren usw., im Rahmen der vorliegenden Erfindung sämtliche zu markierenden Verbindungen oder Gewebe, deren verbesserte Sichtbarmachung in der CARS-Mikroskopie angestrebt wird. Die auch als chemischer Reporter bezeichnete bioorthogonale funktionelle Gruppe darf dabei die Struktur der Probe nicht wesentlich verändern, um die Bioaktivität nicht zu beeinträchtigen. In einem zweiten Schritt wird eine Markiersubstanz mit einer komplementären funktionellen Gruppe eingeführt, die mit dem chemischen Reporter reagiert.

Durch die Verwendung bioorthogonaler Reaktionen wird im Zusammenhang mit der CARS-Mikroskopie eine dezidierte Erkennung von Zielstellen in beliebigen Proben, beispielsweise in Zellen, ermöglicht, ohne die gegebenenfalls weiterhin ablaufenden biochemischen Vorgänge zu beeinträchtigen. Im Anschluss daran erfolgt durch die Markierungsreaktion die eigentliche Synthese oder Einbringung der "aktiven" Substanz für die CARS-Bildgebung.

Durch dieses Verfahren kann der CARS-aktive Streuquerschnitt des jeweiligen Ziels erhöht oder durch geeignete Synthesereaktionen erst erzeugt werden. Durch ein entsprechendes Verfahren wird dabei durch chemische Bildgebung der Vorteil bekannter Multiphotonentechniken mit einer entsprechenden selektiven Reaktion kombiniert. Insbesondere im Vergleich zur herkömmlichen Verwendung von Fluoreszenzfarbstoffen als bildgebenden Elementen (beispielsweise für Single-Photon-Verfahren) können durch die vorteilhaften sterischen Eigenschaften der bei den bioorthogonalen Reaktionen verwendeten Verbindungen tiefer im Gewebe liegende Zielstellen zur Bildgebung herangezogen werden.

Ein weiterer Vorteil, der durch die erfindungsgemäß vorgeschlagenen Maßnahmen erzielt werden kann, ist, wie erwähnt, eine reproduzierbare Gegenfärbung des nichtresonanten Hintergrunds bei der CARS-Mikroskopie.

In CARS-Verfahren wird generell, wie erwähnt, ein nicht resonanter Background betrachtet, der herkömmlicherweise auch als "Gegenfärbung" verwendet werden kann. Dies besitzt jedoch den Nachteil, dass der Hintergrund statistisch ist. Durch die erfindungsgemäß vorgeschlagenen Maßnahmen kann hingegen ein definierter Hintergrund durch eine entsprechende, aktiv vorgenommene "Gegenfärbung" eingebracht werden, so dass auf bestimmte Moleküle abgestellt und das resultierende Bild mit dem erzeugten Hintergrund in Beziehung gesetzt werden kann. Dies ermöglicht die Verbesserung der Reproduzierbarkeit entsprechender CARS-Verfahren und verbesserte quantitative Aussagen.

Wie allgemein bekannt, sind klassische Raman-Verfahren nicht übermäßig sensitiv und erfordern starke Ramanstreuer. Die CARS-Mikroskopie ist wesentlich sensitiver, kann jedoch nicht wie die Raman-Spektroskopie in hochspezifischen komplexen Substanzgemischen eingesetzt werden. Diese geringere Spezifität reicht unter Umständen nicht für die dem Untersuchungsverfahren zugrundeliegende Fragestellung aus. Die Erfindung ermöglicht hingegen eine entsprechende Erhöhung der Spezifität und zusätzlich eine Erhöhung des Streuquerschnitts, wo dies erforderlich ist.

Besonders vorteilhafte Beispiele für bioorthogonale Reaktionen im Rahmen der vorliegenden Erfindung umfassen zumindest einen Reaktionsschritt in Form einer modifizierten Huisgen-Cycloaddition, einer Nitron-Dipol-Cycloaddition, einer Norbonen-Cycloaddition, einer [4+1]- Cycloaddition und/oder einer Oxanorbornadien-Cycloaddition.

Insbesondere sind für den Einsatz im Rahmen der vorliegenden Erfindung die erwähnten kupferfreien Klickreaktionen geeignet, beispielsweise unter Verwendung von Cyklooctinen. Die Cyklooctine werden hierbei beispielsweise an eine Azidgruppe gekoppelt, die ihrerseits in eine entsprechende Probe als erster Reaktionspartner eingebracht werden kann. Azidgruppen sind insbesondere deshalb bioorthogonal, weil sie klein sind, damit gut in das entsprechende Gewebe eindringen und keine sterischen Veränderungen hervorrufen. Azide kommen in natürlichen Proben nicht vor, so dass keine konkurrierenden biologischen Nebenreaktionen existieren (vgl. M.F. Debets et al., Azide: a unique dipole for metal-free bioorthogonal ligations, Chembiochem. 11 (9), 1168-84, 2010). Cyklooctine sind zwar größer, weisen jedoch eine ausreichende Stabilität und Orthogonalität auf, so dass auch sie für in-vivo-Markierungen geeignet sind.

Im Rahmen der vorliegenden Erfindung kann insbesondere auch eine Tetrazin-, eine Tetrazol- und/oder eine Quadricyclan-Reaktion als zumindest ein Reaktionsschritt der bioorthogonalen Reaktion verwendet werden. Auch derartige Reaktionen sind grundsätzlich bekannt.

Wie bereits mehrfach erläutert kann die wenigstens eine intrinsische Struktur der Probe zunächst mit einem ersten Reaktionspartner gekoppelt werden und der mit der intrinsischen Struktur der Probe gekoppelte Reaktionspartner dann mit einem weiteren Reaktionspartner gekoppelt werden. Jeder beliebige Reaktionspartner kann dabei die Resonanzstelle umfassen oder diese kann durch eine Reaktion zweier oder mehrerer beliebiger Reaktionspartner erst gebildet werden.

Als besonders vorteilhaft wird ein Verfahren angesehen, bei dem eine nicht intrinsisch eine Resonanzstelle aufweisende Struktur der Probe mittels der bioorthogonalen Reaktion mit einer Resonanzstelle ausgestattet wird. Wie erläutert, betrifft dies insbesondere den an sich nicht resonanten Hintergrund, der in herkömmlichen Verfahren statistische Signale liefert, die jedoch nicht reproduzierbar sind. Die Erfindung ermöglicht hingegen, den nichtresonanten Hintergrund mit entsprechenden Resonanzstellen zu markieren und damit ein stabiles, reproduzierbares Hintergrundsignal zu erzeugen. Dieses wird vorteilhafterweise durch Auswahl geeigneter Verbindungen derart erzeugt, dass es sich von den eigentlich interessierenden Strukturen kontrastierend abhebt, beispielsweise Peaks bei deutlich anderen Wellenzahlen aufweist.

Ein entsprechendes Verfahren kann umfassen, für die Strukturen des nichtresonanten Hintergrunds der Probe Resonanzstellen bereitzustellen und einen auf diese Resonanzstellen zurückzuführenden Signalanteil des Resonanzsignals mit einem auf intrinsische Resonanzstellen der Probe zurückzuführenden Signalanteil in Beziehung zu setzen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

Figur 1 veranschaulicht schematisch ein CARS-Mikroskop, das in einem Verfahren gemäß einer Ausführungsform der Erfindung eingesetzt werden kann.
Figur 2 zeigt ein Termschema eines CARS-Übergangs, wie er einer Ausführungsform der Erfindung zugrunde liegen kann.
Figur 3 veranschaulicht einen Vier-Wellen-Mischprozess, wie er einer Ausführungsform der Erfindung zugrunde liegen kann.
Figur 4 veranschaulicht ein Verfahren gemäß einer Ausführungsform der Erfindung gemäß einem schematischen Diagramm.
Figur 5 veranschaulicht ein Verfahren gemäß einer Ausführungsform der Erfindung gemäß einem schematischen Diagramm.
Figur 6 veranschaulicht ein Verfahren gemäß einer Ausführungsform der Erfindung gemäß einem schematischen Ablaufplan.

In den Figuren sind einander entsprechende Elemente mit identischen Bezugszeichen versehen und werden nicht wiederholt erläutert.

### Ausführliche Beschreibung der Zeichnungen

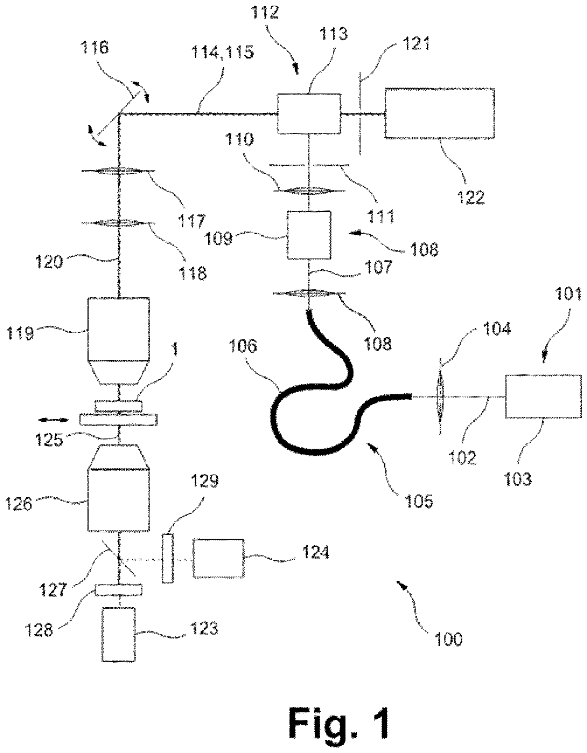

Figur 1 zeigt ein als konfokales Scanmikroskop 100 ausgebildetes Mikroskop, das einen Laser 101 zur Erzeugung eines Lichtstrahls 102 einer ersten Wellenlänge von beispielsweise 800 nm beinhaltet. Der Laser 101 kann als modengekoppelter Titan-Saphir-Laser 103 ausgeführt sein. Der Lichtstrahl 102 wird mit einer Einkoppeloptik 104 in das Ende eines beispielsweise mikrostrukturierten optischen Elements 105 zur Wellenlängenveränderung fokussiert, das als Lichtleitfaser aus Photonic-Band-Gab-Material 106 ausgebildet sein kann.

Zum Kollimieren des aus der Lichtleitfaser aus Photonic-Band-Gab-Material 106 austretenden, in der Wellenlänge verbreiterten Lichtstrahls 107 ist beispielsweise eine Auskoppeloptik 108 vorgesehen. Das Spektrum des entsprechend in der Wellenlänge veränderten Lichtstrahls ist hierdurch beispielsweise über den Wellenlängenbereich von 300 nm bis 1.600 nm nahezu kontinuierlich, wobei die Lichtleistung über das gesamte Spektrum weitgehend konstant ist.

Der in der Wellenlänge verbreiterte Lichtstrahl 107 durchläuft ein Mittel zur Unterdrückung 108, beispielsweise einen dielektrischen Filter 109, der in dem in der Wellenlänge verbreiterten Lichtstrahl 107 die Leistung des Lichtanteils im Bereich der ersten Wellenlänge auf das Niveau der übrigen Wellenlängen des in der Wellenlänge veränderten Lichtstrahls 107 reduziert. Anschließend wird der in der Wellenlänge veränderte Lichtstrahl 107 beispielsweise mit einer Optik 110 auf eine Beleuchtungsblende 111 fokussiert und gelangt anschließend zu einem Mittel 112 zur Selektion, das als ein akustooptisches Bauteil 113 ausgeführt ist und als Hauptstrahlteiler fungiert. Mit dem Mittel zur Selektion 112 können ein Pumplichtstrahl 114 und ein Stokeslichtstrahl 115 je einer von einem Benutzer vorgegeben Wellenlänge selektiert werden.

Vom Mittel zur Selektion 112 gelangen der Pumplichtstrahl 114 und der Stokeslichtstrahl 115, die koaxial verlaufen, zu einem Scanspiegel 116, der diese durch eine Scanoptik 117, eine Tubusoptik 118 und ein Objektiv 119 hindurch über eine Probe 1 führt. Das von der Probe 1 ausgehende Detektionslicht 120, das in der Zeichnung gestrichelt dargestellt ist, gelangt bei einer beispielsweise vorgesehenen Descan-Detektion durch das Objektiv 119 , die Tubusoptik 118 und die Scanoptik 117 hindurch zurück zum Scanspiegel 116 und dann zum Mittel zur Selektion 112, passiert dieses und wird nach Durchlaufen einer Detektionsblende 121 mit einem Detektor 122, der als Multibanddetektor ausgeführt ist, detektiert. Für eine beispielsweise ebenfalls vorgesehene Non-Descan-Detektion können kondensorseitig zwei weitere Detektoren 123, 124 vorgesehen sein. Das in Geradeausrichtung von der Probe ausgehende Detektionslicht 125 wird von einem Kondensor 126 kollimiert und von einem dichroitischen Strahlteiler 127 in Abhängigkeit von der Wellenlänge auf die weiteren Detektoren 123, 124 verteilt. Vor den Detektoren sind Filter 128, 129 zur Unterdrückung der Anteile des Detektionslichts vorgesehen, die die Wellenlängen des Pumplichtstrahls 114 bzw. des Stokeslichtstrahls 115 oder anderes Licht aufweisen.

Auf die Figuren 2 und 3 wurde bereits in der Einleitung Bezug genommen.

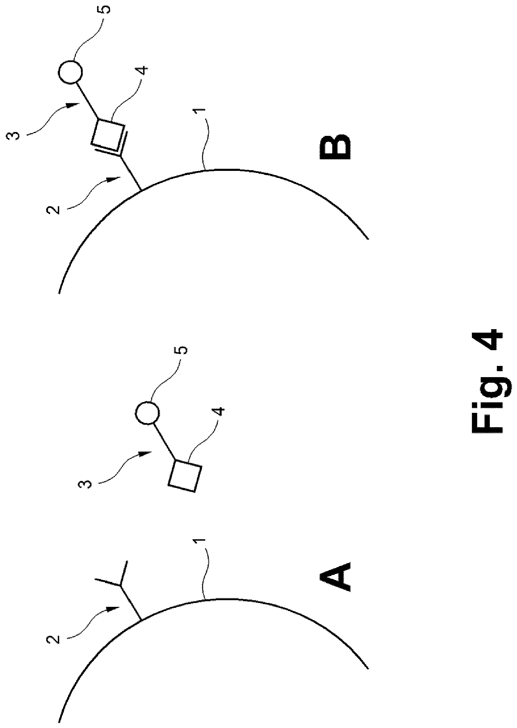

Die Figur 4 zeigt in den Teilfiguren A und B jeweils eine aus einer biologischen Quelle abgeleitete Probe 1. Die Probe 1 kann beispielsweise eine zu markierende Zelle und/oder eine Oberfläche eines mikroskopischen Schnitts und/oder eine entsprechend vorbereitete Gewebeprobe sein.

Die Probe 1 weist im dargestellten Beispiel eine mit 2 bezeichnete intrinsische chemische Struktur auf, die zur Kopplung mit einem Reaktionspartner, hier mit 3 bezeichnet, befähigt ist. Der Reaktionspartner 3 umfasst im dargestellten Beispiel eine Kopplungsstelle 4 und eine Resonanzstelle 5, die bei Anregung mittels Laserbestrahlung aufgrund kohärenter Anti-Stokes-Raman-Streuung ein Resonanzsignal liefern kann.

Detailfigur A der Figur 4 zeigt dabei einen nicht gekoppelten Zustand zwischen der intrinsischen chemischen Struktur 2 der Probe 1 und dem Reaktionspartner 3. Die Teilfigur B veranschaulicht hingegen einen gekoppelten Zustand, der bewirkt, dass die Resonanzstelle 5 des Reaktionspartners 3 nun als Teil der Probe 1 zur Detektion verwendet werden kann.

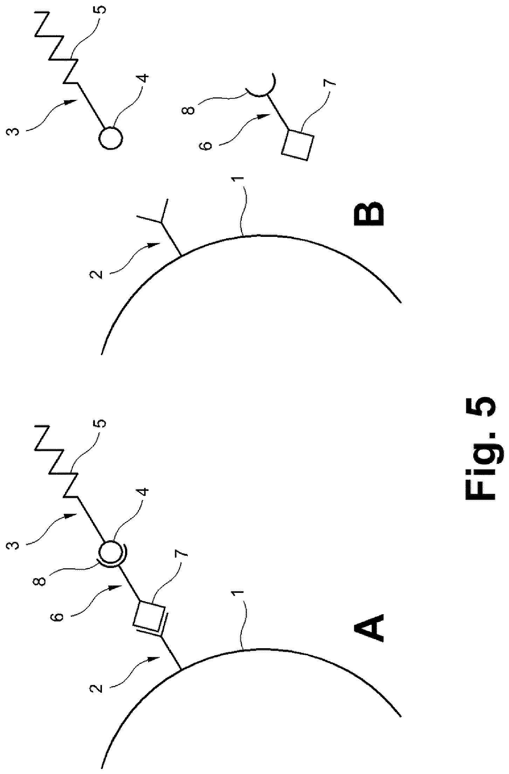

Während in der Figur 4 bzw. deren Teilfiguren A und B eine einstufige Reaktion gezeigt ist, veranschaulicht die Figur 5 eine zweistufige Reaktion. Bei dieser wird die intrinsische chemische Struktur 2 zunächst mit einem Kupplermolekül 6 gekoppelt, das eine erste funktionelle Gruppe 7 zur Kopplung mit der intrinsischen chemischen Struktur 2 der Probe 1 und eine zweite funktionelle Gruppe 8 zur Kopplung mit dem Reaktionspartner 3, der die Resonanzstelle 5 trägt, aufweist. Die intrinsische chemische Struktur 2 der Probe 1 koppelt hier mit der ersten funktionellen Gruppe 7 des Kupplermoleküls 6, der Reaktionspartner 3 koppelt mit seiner Kopplungsstelle 4 mit der zweiten funktionellen Gruppe 8 des Kupplermoleküls 6. Die in den Figuren 4 und 5 teilweise unterschiedlich gezeichneten Kopplungsstellen 4 und Resonanzstellen 5 dienen nur der Veranschaulichung. Auch gemäß Figur 5 wird die Resonanzstelle 5 Teil der Probe 1 und kann entsprechen detektiert werden. Im Gegensatz zu Figur 4 zeigt die Teilfigur A hier jedoch einen gekoppelten, Detailfigur B hingegen einen nicht gekoppelten Zustand.

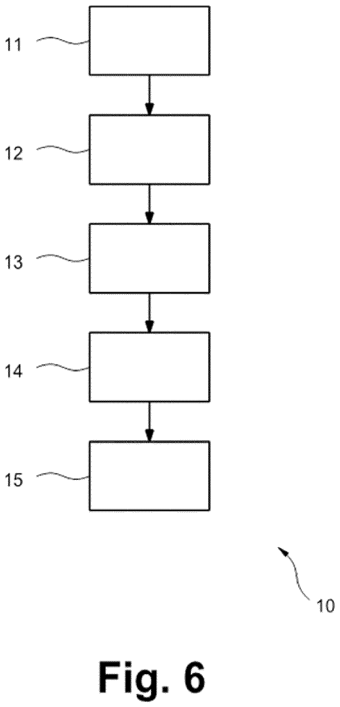

In der Figur 6 ist ein Verfahren gemäß einer Ausführungsform einer Erfindung in Form eines schematischen Ablaufplans dargestellt und insgesamt mit 10 bezeichnet. Das Verfahren beginnt in einem Verfahrensschritt 11 mit der Bereitstellung einer Probe 1. In einem Verfahrensschritt 12 wird eine bioorthogonale Reaktion einer intrinsischen chemischen Struktur der Probe mit zumindest einem weiteren Reaktionspartner durchgeführt. In einem Schritt 13 wird die Probe mit der Resonanzstelle, die mittels der bioorthogonalen Reaktion in Schritt 12 bereitgestellt wurde, in ein geeignetes Untersuchungssystem, beispielsweise ein CARS-Mikroskop gemäß Figur 1, verbracht. In Schritt 14 erfolgt eine Untersuchung der Probe in dem Untersuchungssystem. Ein entsprechend erhaltendes Signal wird in einem Schritt 15 erfasst und beispielsweise zur Ableitung wenigstens einer Struktureigenschaft einer die wenigstens eine Resonanzstelle enthaltenden chemischen Struktur verwendet.

## Patentansprüche

1. Verfahren zur Untersuchung einer von einer biologischen Quelle abgeleiteten Probe (1) durch CARS-Mikroskopie, bei dem ein durch Anregen wenigstens einer Resonanzstelle (5) der Probe (1) mittels Laserbestrahlung durch kohärente Anti-Stokes-Raman-Streuung erzeugtes Resonanzsignal bildgebend erfasst wird, **dadurch gekennzeichnet, dass** das Verfahren (10) umfasst, die zumindest eine Resonanzstelle (5) mittels einer bioorthogonalen Reaktion einer intrinsischen chemischen Struktur (2) der Probe (1) mit zumindest einem Reaktionspartner (3, 6) bereitzustellen.

2. Verfahren nach Anspruch 1, bei dem die Resonanzstelle (5) zumindest teilweise Teil des zumindest einen Reaktionspartners (3, 6) ist und/oder zumindest teilweise durch die bioorthogonale Reaktion erzeugt wird.

3. Verfahren nach Anspruch 1 oder 2, bei dem als zumindest ein Reaktionsschritt der bioorthogonalen Reaktion eine Diels-Alder-Reaktion und/oder eine Staudinger-Ligation verwendet wird.

4. Verfahren nach einem der vorstehenden Ansprüche, bei dem als zumindest ein Reaktionsschritt der bioorthogonalen Reaktion eine modifizierte Huisgen-, eine Nitron-Dipol-, eine Norbornen-, eine [4+1]- und/oder eine Oxanorbornadien-Cycloaddition verwendet wird.

5. Verfahren nach einem der vorstehenden Ansprüche, bei dem als zumindest ein Reaktionsschritt der bioorthogonalen Reaktion eine Tetrazin-, eine Tetrazol- und/oder eine Quadricyclan-Reaktion verwendet wird.

6. Verfahren nach einem der vorstehenden Ansprüche, bei dem die wenigstens eine intrinsische Struktur (2) der Probe zunächst mit einem ersten Reaktionspartner (6) gekoppelt wird und der mit der intrinsischen Struktur (2) der Probe gekoppelte Reaktionspartner (6) anschließend mit einem weiteren Reaktionspartner (3) gekoppelt wird.

7. Verfahren nach Anspruch 6, bei dem der weitere Reaktionspartner (3) die Resonanzstelle (5) umfasst.

8. Verfahren nach einem der vorstehenden Ansprüche, das umfasst, für eine nicht intrinsisch eine Resonanzstelle (5) aufweisende Struktur der Probe (1) mittels der bioorthogonalen Reaktion eine Resonanzstelle (5) bereitzustellen.

9. Verfahren nach einem der vorstehenden Ansprüche, bei dem aus dem Resonanzsignal wenigstens eine Struktureigenschaft einer die wenigstens eine Resonanzstelle (5) enthaltenden Struktur abgeleitet wird

10. Verfahren nach einem der vorstehenden Ansprüche, bei dem intrinsische Strukturen eines nichtstreuenden Hintergrunds der Probe (1) mit Resonanzstellen (5) versehen werden und ein auf diese Resonanzstellen (2) zurückzuführender Signalanteil des Resonanzsignals mit einem auf intrinsische Resonanzstellen (2) zurückzuführenden Signalanteil in Beziehung gesetzt wird.

## Claims

1. Method for examining a sample (1) derived from a biological source by way of CARS microscopy, in which a resonance signal, which is generated by exciting at least one resonance point (5) of the sample (1) by means of laser irradiation by way of coherent anti-Stokes Raman scattering, is acquired for imaging, **characterized in that** the method (10) comprises providing the at least one resonance point (5) by means of a bioorthogonal reaction of an intrinsic chemical structure (2) of the sample (1) with at least one reaction partner (3, 6).

2. Method according to Claim 1, wherein the resonance point (5) is at least partially part of the at least one reaction partner (3, 6) and/or is at least partially created by the bioorthogonal reaction.

3. Method according to Claim 1 or 2, wherein a Diels-Alder reaction and/or a Staudinger ligation is used as at least one reaction step of the bioorthogonal reaction.

4. Method according to any one of the preceding claims, wherein a modified Huisgen, a nitrone dipole, a norbornene, a [4+1], and/or an oxanorbornadiene cycloaddition is used as at least one reaction step.

5. Method according to any one of the preceding claims, wherein a tetrazine, a tetrazole, and/or a quadricyclane reaction is used as at least one reaction step of the bioorthogonal reaction.

6. Method according to any one of the preceding claims, wherein the at least one intrinsic structure (2) of the sample is firstly coupled to a first reaction partner (6) and the reaction partner (6) coupled to the intrinsic structure (2) of the sample is subsequently coupled to a further reaction partner (3).

7. Method according to Claim 6, wherein the further reaction partner (3) comprises the resonance point (5).

8. Method according to any one of the preceding claims, which comprises providing a resonance point (5) for a structure of the sample (1), which does not intrinsically have a resonance point (5), by means of the bioorthogonal reaction.

9. Method according to any one of the preceding claims, wherein at least one structural property of a structure containing the at least one resonance point (5) is derived from the resonance signal.

10. Method according to any one of the preceding claims, wherein intrinsic structures of a non-scattering background of the sample (1) are provided with resonance points (5) and a signal component of the resonance signal to be attributed to these resonance points (2) is correlated with a signal component to be attributed to intrinsic resonance points (2).

## Revendications

1. Procédé d'analyse d'un échantillon (1) dérivé d'une source biologique par microscopie CARS, dans lequel un signal de résonnance généré par diffusion anti-Stokes-Raman cohérente est détecté sous forme d'image par excitation d'au moins un point de résonnance (5) de l'échantillon (1) au moyen d'une irradiation au laser, **caractérisé en ce que** le procédé (10) consiste à fournir l'au moins un point de résonnance (5) au moyen d'une réaction bio-orthogonale d'une structure chimique intrinsèque (2) de l'échantillon (1) avec au moins un partenaire réactionnel (3, 6).

2. Procédé selon la revendication 1, dans lequel le point de résonnance (5) fait au moins partiellement partie de l'au moins un partenaire réactionnel (3, 6) et/ou est généré au moins partiellement par la réaction bio-orthogonale.

3. Procédé selon la revendication 1 ou 2, dans lequel une réaction de Diels-Alder et/ou une ligation de Staudinger est utilisée sous la forme d'au moins une étape réactionnelle de la réaction bio-orthogonale.

4. Procédé selon l'une quelconque des revendications précédentes, dans lequel une Cycloaddition modifiée de Huisgen, de dipôle de nitrone, de norbornène, de [4+1]-norbornadiène et/ou d'oxanorbornadiène est utilisée sous la forme d'au moins une étape réactionnelle de la réaction bio-orthogonale.

5. Procédé selon l'une quelconque des revendications précédentes, dans lequel une réaction de tétrazine, de tétrazole et/ou de quadricyclane est utilisée sous la forme d'au moins une étape réactionnelle de la réaction bio-orthogonale.

6. Procédé selon l'une quelconque des revendications précédentes, dans lequel l'au moins une structure intrinsèque (2) de l'échantillon est en premier lieu couplée à un premier partenaire réactionnel (6) et le partenaire réactionnel (6) couplé à la structure intrinsèque (2) de l'échantillon est ensuite couplé à un autre partenaire réactionnel (3).

7. Procédé selon la revendication 6, dans lequel l'autre partenaire réactionnel (3) comprend le point de résonnance (5).

8. Procédé selon l'une quelconque des revendications précédentes consistant à fournir au moyen de la réaction bio-orthogonale un point de résonnance (5) pour une structure de l'échantillon (1) comportant non intrinsèquement un point de résonnance (5).

9. Procédé selon l'une quelconque des revendications précédentes, dans lequel au moins une propriété structurelle d'une structure contenant l'au moins un point de résonnance (5) est déduite du signal de résonnance.

10. Procédé selon l'une quelconque des revendications précédentes, dans lequel des structures intrinsèques d'un arrière-plan non diffusant de l'échantillon (1) sont pourvues de points de résonnance (5) et une partie de signal du signal de résonnance attribuée auxdits points de résonnance (2) est corrélée à une partie de signal attribuée à des points de résonnance intrinsèques (2).
